# EUROPEAN PATENT SPECIFICATION

(11) **EP 0 320 076 B1**
(45) Date of publication and mention of the grant of the patent: **10.02.1993**
(21) Application number: 88300067.1
(22) Date of filing: 06.01.1988
(51) Int. Cl.: B65D 81/24, B32B 27/12, A23L 3/00

(54) **Vapour relase device**
Vorrichtung für Dampfabgabe
Dispositif pour dégager des vapeurs

(30) Priority: 01.12.1987 US 127165
(43) Date of publication of application: 14.06.1989
(73) Proprietor: Akiba, Yosuke, Shibuya-ku Tokyo 151 (JP)
(72) Inventor: Akiba, Yosuke, Shibuya-ku Tokyo 151 (JP)
(74) Representative: Holmes, Michael John

(56) References cited:
- US-A- 3 698 974

## Description

The present invention relates to a device for the controlled delayed release of a food preservative vapour from a liquid, to the use of said device in the preservation of food, and to a method of manufacture of said device.

The preservation of food has been an important concern to mankind since the beginning of time. A problem associated with this concern is the fact that preservatives could not be stored with the food without the food losing its colour, flavour, or nutritional value. In fact, many food stores today sell only natural, non-preserved foods for these very reasons.

In order to utilize a preservative with a food product, the preservative must either be incorporated within the food itself or else put on an absorbent and placed adjacent to the food in a closed environment. The former type of preservation has the disadvantage that chemical additives incorporated directly into the food may be harmful to the human body.

The latter choice, placing the preservatives onto an absorbent and allowing the preservatives to evaporate, avoids this disadvantage. One gaseous preservative which has been proposed is gaseous ethanol. However, gaseous ethanol is not entirely satisfactory because even after a brief exposure period, the food tends to become tained with an ethanol odour. US patent 4550026 discloses improved gaseous preservatives wherein aliphatic acids are added to the ethanol. The ethanol/aliphatic acid preservatives were found to produce lower levels of these ethanol odors.

The above described gaseous preservatives may typically be used by placing the preservatives on an absorbent material, such as silicon dioxide, sucrose, dextrin, fine crystalline cellulose, and kaolin, contained within a permeable sachet. The preservatives are then allowed to evaporate to provide a preservative atmosphere around the food substance. One problem with this method is, however, that the time of evaporation is frequently too short.

Similar evaporative packets have been used in other areas - US patent 3698974 discloses a device specifically designed for emission of insecticidal vapours.

Another problem with the above listed absorbents is safety to consumers. Absorbents which are packaged as satchets, paper bags and plastic bags do not look very different from the food itself and thus infants tend to be attracted to this additional item in the food package and may attempt to put the absorbents in their mouths. Furthermore, such sachets and bags are not aesthetically appealing and the average consumer psychologically resists purchasing an item which has foreign entities inside or around his food.

In addition, the manufacture of conventional absorbents in sachets or bags is subject to certain disadvantages. Production is very expensive and there is high tendency for the packages which held the absorbents to puncture and break. This in turn leads to lost production time and increased costs.

Consequently, a need exists for improvements in food preservation absorbents which will result in greater preservative efficiency, safety to consumers, and manufacturing efficiency.

Similar problems exist in other fields and there is a general need for a cheap and efficient device for controlled delayed release of a vapour from a liquid.

According to the present invention, we provide a device for controlled delayed release of a food preservative vapour from a liquid comprising a sheet of an absorbent for said liquid, said sheet being bonded on each side via a reticular non-woven bonding sheet to a plastic film covered by a vapour permeable plastic cover layer, at least one edge of said absorbent layer being uncovered and/or said plastic sheet and cover layer being vapour permeable.

While present absorbents used in the food industry lack means to regulate the rate of evaporation of the liquid preservative therefrom, the new absorbent's gas emission rate can be controlled and regulated by opening the sides and faces of the absorbent. The new absorbent is also psychologically more attractive to the consumer since it can be used as if it were part of the container or package of food. Therefore, small children are not led to put it in their mouths. Furthermore, as explained hereinafter, the production process is greatly simplified. The device of the present invention may be used as a substrate for any of the known gaseous preservatives but it is especially well suited for use with the ethanol and aliphatic acid preservative mixtures disclosed in US patent 4550026. A preferred preservative liquid for absorption into the device according to the invention is ethanol containing 0.3 to 0.5% by weight of volatile aliphatic acids, e.g. having 2-6 carbon atoms, for example acetic or propionic acid.

In accordance with the present invention a liquid preservative is absorbed onto the absorbent and within a suitable closed food container where the liquid is allowed to vaporize to provide an atmosphere of preservative. In this way, food which is placed within the container is exposed to the preserving atmosphere in calculated quantities while direct contact with the liquid mixture is avoided.

The above discussed and many other features and attendant advantages of the present invention will become apparent as the invention becomes better understood by reference to the following detailed description when considered in conjunction with the accompanying drawings.

Fig. 1 is a perspective view of a preferred device of the present invention.

Fig. 2 is a cross-sectional view of Fig. 1 taken in the II-II plane.

Fig. 3 is an exploded view of the device of Fig. 1.

Fig. 4 is an absorption capacity graph illustrating preservative effect of the device according to the present invention compared with other absorbents.

Fig. 5 is a time-based graph illustrating the evaporation rate of a device according to the present invention when the gaseous emission rate is quantitatively controlled.

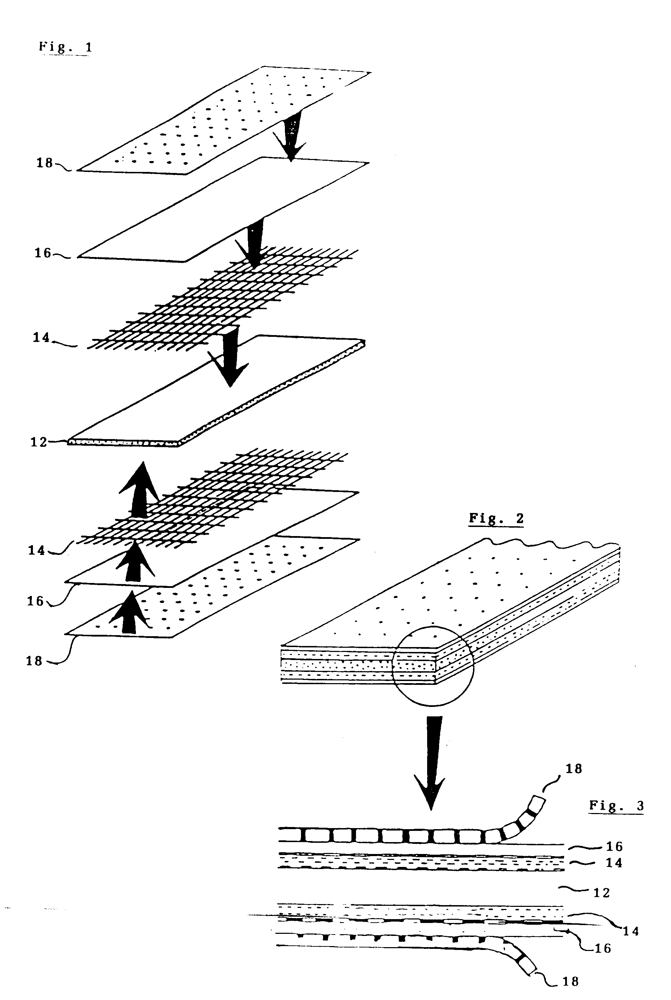

Referring now to the drawings, and more particularly to Fig. 3, there is shown a food preservation device for dispersing gaseous food preservatives into a food container. The device shown in Figure 3 includes an absorbent strip 12 with a layer of reticular non-woven fabric 14, a layer of plastic film 16, and a plastic cover layer 18 consecutively positioned on each side of the absorbent strip.

In the preferred embodiments of the apparatus shown in Figs. 1 and 2, the absorbent strip 12 consists of multiple layers of high grade long fibre paper pulp. Preferably, the paper pulp absorbent layer will have a thickness ranging from about 2.0 to about 2.5 mm.

A layer of non-woven fabric 14 in a lattice network is directly positioned on each side of the absorbent strip 12. The lattice openings range in size from 2.5 x 2.5 mm to 3.0 x 3.0 mm. The purpose of this lattice network fabric is to bond the absorbent sheet to the adjacent plastic film, preferably without the use of adhesives and it is thus advantageously composed of a thermoplastic material permitting thermocompression bonding, for example rayon, nylon or polyester fibre material. The non woven material also adds to the strength of the multi-layer material both during manufacture and subsequently.

After placing the non woven fabric layers 14 on each side of the absorbent strip 12, the fabric layer 14 is bonded to the absorbent strip 12. The preferred method of integration is heat-sealing in order to avoid use of adhesive which may present a health hazard.

The absorbent strip 12 and fabric 14 combination is then covered with a plastic film layer 16. The plastic film 16 preferably used is capable of being impregnated with a flavor essence. The added flavoring assists the compatibility of the impregnated device with the particular food to be preserved. Thus, the preservative can remain in close proximity with the food substance without significantly tainting the food substance's flavor. Suitable plastics for use as layer 16 include polyvinyl chloride, polystyrene and polyolefins. However, many other gas permeable plastics are possible.

Next, a plastic cover 18 is placed on each side of the absorbent strip 12, non-woven fabric 14, and plastic film 16 combination. The plastic cover 18 may take the form of polyester polypropylene, polyvinylidene chloride, polyvinylalcohol or polyacrylonitrile. It is then sealed by heat-sealing, by the electric corona technique, or ultrasonically. If the plastic cover layer is made to overlap the edges of the pre-formed absorbant combination this will provide a seal at those edges, thus controlling evaporation from the absorbent.

The device can conveniently be made on a continuous basis, the paper pulp strip 12 being fed from a roll to a point at which strips of the fabric 14 are fed on either side of the strip 12 into a heated roller system where the layers are bonded by thermocompression. Strips of plastic film material are then fed on either side of the absorbent fabric combination and again continuously bonded by thermocompression. Finally the plastic cover layers are applied in a similar fashion. The completed strip may then be cut laterally to provide rectangular devices according to the invention. It is a particular advantage of the devices of the invention that they can be made cheaply and accurately by such a continuous technique.

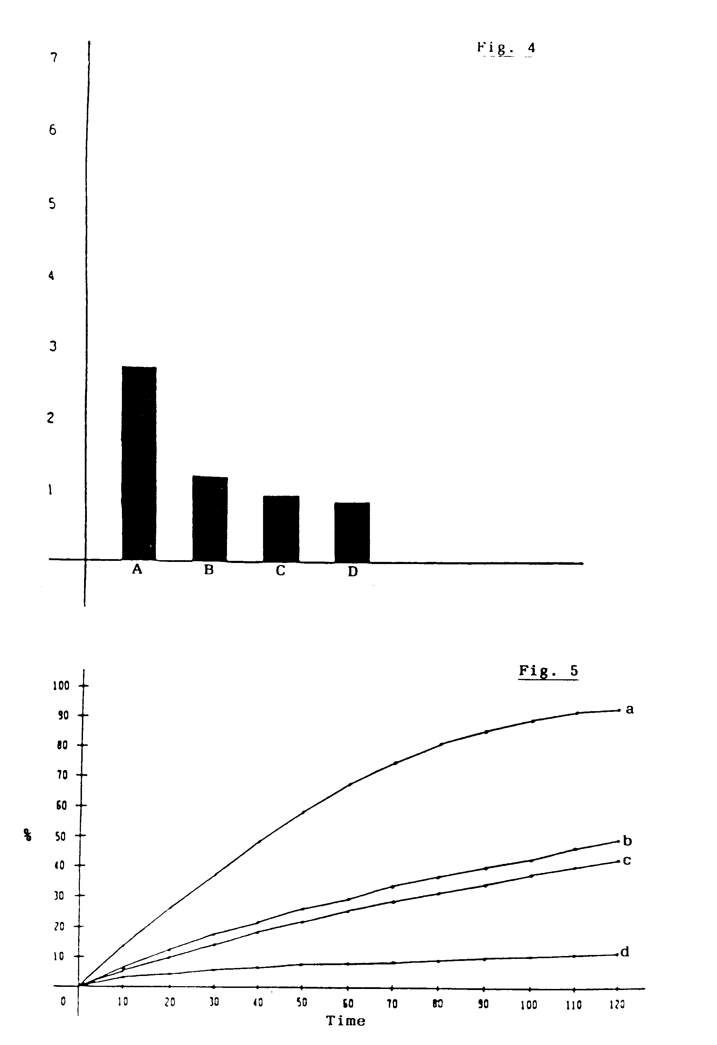

Fig. 4 shows the absorption capacity for ethanol containing 0.5% acetic acid of the absorbent material of the present invention versus various other absorbent materials. After maximum absorption, the absorbent used in the devices of the present invention (A) will hold 2.8 times its dry weight. Silicon dioxide (B) will hold only 1.17 times its dry weight, zeolite (C) fine powder only 0.87, and a conventional ink blotter (D) only 0.84. The absorption capacity reveals the potential preservation power of the long fibre high grade paper pulp. The capacity is almost two and a half times that of silicon dioxide.

One feature of the present invention is its capability to regulate the vapour emission rate in order to disperse the vapour at only that rate actually needed to preserve the food effectively. This quantitatively controlled emission may be accomplished by small perforations in the plastic cover layer and/or by selectively arranging for the edges and/or ends of the strip absorbent to be exposed.

Now referring to Fig. 5, a graph illustrates the rate of evaporation (% evaporation versus time) for various degrees of exposure of the absorbent layer in a rectangular device according to the invention. Line (a) of Fig. 5 shows the evaporation rate when one side of the plastic cover layer contains perforations and all lateral edges and ends are opened. Note that over 90% of the liquid preservative evaporates in approximately two hours. This configuration provides the maximum release of preservative.

Line (b) of Fig. 5 shows the rate of evaporation when the absorbent strip has a non-perforated plastic cover layer, but the all lateral edges and ends are open. This reduces the evaporation rate by almost 50% of the previous configuration.

Lines (c) and (d) of Fig. 5 relate to absorbent strips covered with a non-perforated plastic, but in these instances, the sides and ends are not opened simultaneously. In the case of line (c), only the lateral edges of the absorbent strip are open, and in the case of line (d), only the ends of the absorbent strips are opened. Both of these configurations reduce the evaporation rate with line (d) showing a reduction in evaporation rate of almost 85% as compared with line (a).

The purpose behind controlling the evaporation rate is to regulate the preservative effect for various food items. If a food item has high moisture levels such as fresh meat and fish, then the preservative effect will need to be much greater than the preservative effect for a low moisture food such as flour. The evaporation controls allow the preservative in the lower moisture foods to last longer with little or no loss of preservation effect while at the same time retain the capability of being used with a high moisture food product.

The following Table shows the extent of preservation which may be achieved in different food products, using the device according to the invention, and a preservative liquid consisting of ethanol containing 0.5% by weight of acetic acid. The device consisted of a layer of high grade long fibre paper pulp bonded via rayon non woven fibre net fabric to a polyvinyl chloride layer, with a non-perforated polyvinylidene chloride cover layer. The paper pulp layer had the dimensions 2mm x 30mm x 50mm. All edges of the pulp layer were exposed.

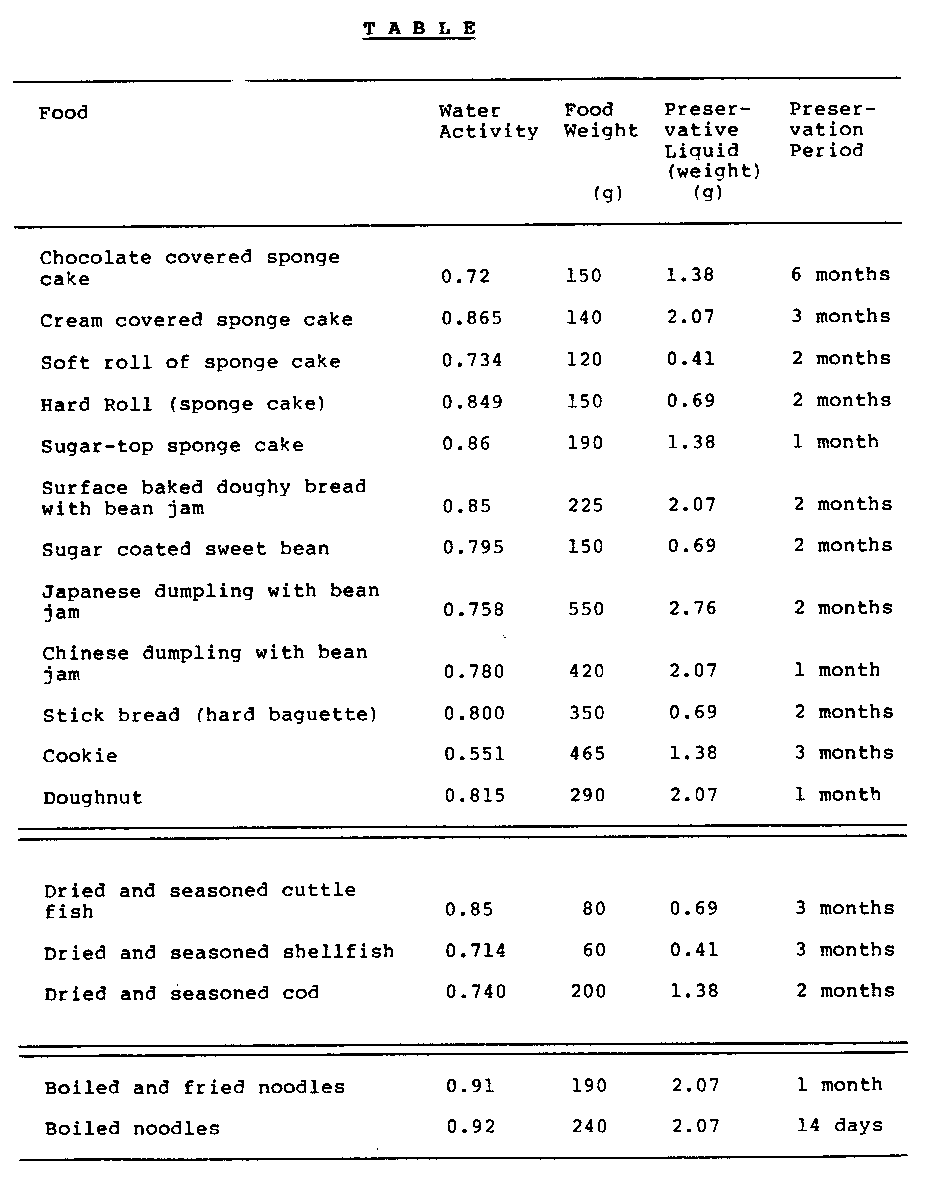

Having thus described exemplary embodiments of the present invention, it should be noted by those skilled in the art that the within disclosures are exemplary only and that various other alternatives, adaptations and modifications may be made within the scope of the present invention which is defined and limited only by the following claims.

## Claims

1. A device for controlled delayed release of a food preservative vapour from a liquid comprising a sheet of an absorbent for said liquid, said sheet being bonded on each side via a reticular non-woven bonding sheet to a plastic film, covered by a vapour permeable plastic cover layer, at least one edge of said absorbent layer being uncovered and/or said plastic sheet and cover layer being vapour permeable.

2. A device as claimed in claim 1 in which the plastic film is impregnated with a liquid capable of releasing a second vapour.

3. A device as claimed in claim 2 in which said second vapour is a food odour.

4. A device as claimed in claim 1 in rectangular form in whch two opposed edges of the absorbent layers are uncovered while the remaining two edges are covered by overlapping extensions of the said plastics layers.

5. A device as claimed in any of the preceding claims in rectangular form in which all four edges of the absorbent layer are uncovered.

6. A device according to any of the previous claims, wherein said absorbent sheet is comprised of long fibre paper pulp.

7. A device according to claim 6, wherein said sheet is about 2.0 to about 2.5 mm in thickness.

8. A device according to claim 7, wherein said plastic cover layer contains perforations.

9. The use of a device as claimed in claim 1 for delayed release of a food preservative vapour into a closed food container.

10. A method of manufacture of devices as claimed in claim 1 in which strips of said absorbent, reticular non-woven bonding sheet, plastic film and plastic cover layers are continously bonded together in the required order and the resulting strip cut to provide a number of said devices.

## Patentansprüche

1. Eine Vorrichtung zum gesteuerten verzögerten Abgeben eines Konservierungsmitteldampfes für Nahrungsmittel aus einer Flüssigkeit umfassend
einen Bogen eines Absorptionsmittels für diese Flüssigkeit, wobei der Bogen auf jeder Seite über einen netzförmigen, nicht gewebten Bindungsbogen an einen Kunststoff-Film gebunden ist, der durch eine dampfdurchlässige Kunststoffabdecklage abgedeckt ist, wobei wenigstens ein Rand der Absorptionsmittellage nicht abgedeckt ist und/oder der Kunststoffbogen und die Abdecklage dampfdurchlässig sind.

2. Vorrichtung nach Anspruch 1,
bei der der Kunststoff-Film mit einer zur Abgabe eines zweiten Dampfes geeigneten Flüssigkeit imprägniert ist.

3. Vorrichtung nach Anspruch 2,
bei der der zweite Dampf ein Nahrungsmittelgeruch ist.

4. Vorrichtung nach Anspruch 1 in rechteckiger Form,
bei der zwei gegenüberliegende Ränder der Absorptionsmittellagen nicht abgedeckt sind, während die übrigbleibenden zwei Ränder durch überlappende Verlängerungen der Kunststofflagen abgedeckt sind.

5. Vorrichtung nach einem der vorhergehenden Ansprüche in rechteckiger Form,
bei der alle vier Ränder der Absorptionsmittellage nicht abgedeckt sind.

6. Vorrichtung nach einem der vorhergehenden Ansprüche,
wobei der Absorptionsmittelbogen langfaserige Papierpulpe umfaßt.

7. Vorrichtung nach Anspruch 6,
wobei der Bogen etwa 2,0 bis etwa 2,5 mm stark ist.

8. Vorrichtung nach Anspruch 7,
wobei die Kunststoffabdecklage Perforationen enthält.

9. Die Verwendung einer Vorrichtung nach Anspruch 1
für die verzögerte Abgabe eines Konservierungsmitteldampfes für Nahrungsmittel in einem geschlossenen Nahrungsmittelbehälter.

10. Verfahren zur Herstellung einer Vorrichtung nach Anspruch 1,
bei dem Streifen des Absorptionsmittels, des netzförmigen, nicht gewebten Bindungsbogens, des Kunststoff-Films und der Kunststoffabdecklagen in der erforderlichen Reihenfolge kontinuierlich aneinandergebunden werden und der sich ergebende Streifen geschnitten wird, um eine Anzahl der Vorrichtungen vorzusehen.

## Revendications

1. Dispositif pour dégagement retardé contrôlé d'une vapeur de protection d'aliment à partir d'un liquide comprenant une feuille d'absorbant pour ce liquide, la feuille étant liée de chaque côté par une feuille de liaison non tissée réticulée à un film en plastique, couverte par une couche de couverture en plastique perméable à la vapeur, au moins un bord de la couche absorbante étant non couverte et/où la feuille de plastique et la couche de couverture étant perméable à la vapeur.

2. Dispositif selon la revendication 1, dans lequel le film plastique est imprégné avec un liquide adapté pour dégager une seconde vapeur.

3. Dispositif selon la revendication 2, dans lequel la seconde vapeur est une odeur d'aliment.

4. Dispositif selon la revendication 1, en forme rectangulaire, dans lequel deux bords opposés des couches absorbantes sont non couverts alors que les deux autres bords sont couverts par des prolongements de recouvrement des couches en plastique.

5. Dispositif selon l'une quelconque des revendications précédentes, de forme rectangulaire, dans lequel les quatre bords de la couche absorbante sont non couverts.

6. Dispositif selon l'une quelconque des revendications précédentes, dans lequel la feuille absorbante comprend de la pâte à papier à longues fibres.

7. Dispositif selon la revendication 6, dans lequel la feuille a une épaisseur d'environ 2,0 à 2,5 mm.

8. Dispositif selon la revendication 7, dans lequel la couche de couverture en plastique comprend des perforations.

9. Utilisation d'un dispositif selon la revendication 1 pour le dégagement retardé d'une vapeur de protection d'aliment dans un récipient d'aliment fermé.

10. Procédé de fabrication de dispositifs selon la revendication 1, dans lequel des bandes de l'absorbant, feuille de liaison non tissée réticulée, film en plastique et couches de couverture en plastique sont pliés continûment ensemble dans l'ordre requis et la bande résultante est coupée pour fournir un nombre desdits dispositifs.
